(19) Europäisches Patentamt
European Patent Office
Office européen des brevets

(11) **EP 2 294 142 B1**

(12) **FASCICULE DE BREVET EUROPEEN**

(45) Date de publication et mention
de la délivrance du brevet:
**01.04.2020 Bulletin 2020/14**

(21) Numéro de dépôt: **09772351.4**

(22) Date de dépôt: **24.06.2009**

(51) Int Cl.:
*C09D 5/00* *(2006.01)*    *C09D 5/08* *(2006.01)*
*B05D 7/14* *(2006.01)*    *C23C 22/26* *(2006.01)*
*C23C 22/68* *(2006.01)*

(86) Numéro de dépôt international:
**PCT/EP2009/057861**

(87) Numéro de publication internationale:
**WO 2010/000651 (07.01.2010 Gazette 2010/01)**

(54) **PROCÉDÉ DE REVÊTEMENT D'UNE SURFACE MÉTALLIQUE PAR UNE COUCHE HYBRIDE**

VERFAHREN ZUR BESCHICHTUNG EINER METALLOBERFLÄCHE MIT EINER HYBRIDSCHICHT

METHOD FOR COATING A METAL SURFACE WITH A HYBRID LAYER

(84) Etats contractants désignés:
**AT BE BG CH CY CZ DE DK EE ES FI FR GB GR HR HU IE IS IT LI LT LU LV MC MK MT NL NO PL PT RO SE SI SK TR**

(30) Priorité: **02.07.2008 BE 200800368**

(43) Date de publication de la demande:
**16.03.2011 Bulletin 2011/11**

(73) Titulaire: **Centre De Recherches Metallurgiques ASBL - Centrum Voor Research In De Metallurgie vzw 1000 Bruxelles (BE)**

(72) Inventeur: **LE CRAZ, Sébastien 4000 Liege (BE)**

(74) Mandataire: **Pronovem Office Van Malderen Parc d'affaires Zénobe Gramme- bâtiment K Square des Conduites d'Eau 1-2 4020 Liège (BE)**

(56) Documents cités:
**WO-A-03/048403    US-A1- 2004 054 044**

## Description

### Objet de l'invention

La présente invention se rapporte à un procédé pour revêtir un substrat métallique de forme simple ou complexe, statique ou en mouvement, au moyen d'une couche protectrice hybride minérale/organique.

La présente invention se présente dans la continuité des procédés de revêtement notamment décrits dans les demandes de brevet internationales WO-A-03/048403 et WO-A-2005/059196.

### Etat de la technique

Dans le cadre de la protection des bandes d'acier contre la corrosion, la Demanderesse travaille depuis un certain nombre d'années sur des traitements alternatifs à la chromatation. En effet, cette dernière utilisant du Cr(VI) cancérigène a été bannie des lignes fournissant l'acier pour des applications domestiques et donc un procédé de remplacement doit être développé.

Différentes entreprises travaillent sur ces nouveaux traitements et proposent une grande variété de produits. Cela va du dépôt d'un oxyde stable comme la silice, la zircone ou l'oxyde de titane entre autres en passant par des phosphates vers des dépôts plus organiques comme les silanes.

Les difficultés majeures de ce type de traitement sont un temps limité pour l'application car la bande défile très rapidement dans les lignes de fabrication, la quasi obligation d'utiliser les équipements existants pour effectuer le dépôt, l'emploi de composés à risques faibles pour l'opérateur et l'environnement et enfin des performances équivalentes à la chromatation pour un coût du même ordre de grandeur, ce qui implique donc une faible épaisseur (50-500 nm).

Dans la demande de brevet WO-A-03/048403, la Demanderesse présente une invention se rapportant à un procédé pour revêtir en continu un substrat en mouvement et à haute température au moyen d'une couche protectrice ultra-fine (entre 40 et 500 nm) à partir d'une solution aqueuse contenant des nanoparticules d'oxyde de silicium, titane, zirconium, etc.

Dans la demande de brevet WO-A-2005/059196, la Demanderesse présente une amélioration du procédé décrit dans la demande de brevet international WO-A-03/048403 grâce à l'utilisation d'additifs chimiques influençant de manière antagoniste la réaction de dépôt d'une couche ultrafine de nanoparticules d'oxyde. L'ajout de tels composés permet d'obtenir des couches d'épaisseur encore plus faible que dans la demande précitée, c'est-à-dire d'épaisseur typiquement inférieure à 100 nm.

Le document US 2004/0054044 concerne un procédé pour le revêtement d'une surface métallique au moyen d'une composition. Outre de l'eau, la composition comprend :

a) au moins un agent filmogène organique contenant au moins un polymère qui est soluble dans l'eau ou dispersé dans l'eau,
b) une quantité de cations et/ou complexes hexafluorés de cations choisis dans le groupe comprenant le titane, le zirconium, le hafnium, le silicium, l'aluminium et le bore, et
c) au moins un composé inorganique sous forme de particules ayant un diamètre moyen de particules de 0,005 à 0,2 $\mu$m, mesuré avec un microscope électronique à balayage.

La surface métallique propre est mise en contact avec la composition aqueuse et un film contenant des particules est formé sur la surface métallique. Ce film est ensuite séché, le film sec ayant une épaisseur de couche de 0,01 à 10 $\mu$m.

### Buts de l'invention

La présente invention vise à fournir un procédé pour recouvrir un substrat métallique d'une couche hybride de revêtement conférant au métal une protection très élevée contre la corrosion.

La présente invention vise également à fournir un procédé pour recouvrir un substrat métallique d'une couche hybride minérale/organique conférant une excellente adhérence des peintures, dans le cadre d'une utilisation nécessitant une application de peintures.

### Brève description des figures

La figure 1 représente un échantillon galvanisé, revêtu en continu selon le procédé de la présente invention et mis au brouillard salin (épaisseur de couche de revêtement mesurée par XPS : 120 nm) A gauche, la photo est prise après 24 h et à droite après 48 h.

La figure 2 représente un échantillon traité en continu selon l'invention et peint, puis embouti et immergé dans l'eau bouillante pendant 4 h.

La figure 3 représente un échantillon échantillon traité en continu selon l'invention et peint et plié 1T (*T-bend test*).

La figure 4 montre la cinétique de polymérisation d'une diamine et d'un diépoxy pour obtenir un prépolymère selon l'invention, ladite cinétique étant mesurée par l'évolution de la viscosité au cours du temps (à des températures de 30, 40 et 50°C resp.).

### Principaux éléments caractéristiques de l'invention

La présente invention divulgue un procédé pour revêtir un substrat métallique de forme simple ou complexe, statique ou en mouvement, au moyen d'une couche hybride minérale/organique ultrafin, d'épaisseur comprise entre 50 et 500 nm, déposé sur le substrat, caractérisé par les étapes suivantes :

- on prépare une première solution aqueuse constituée de nanoparticules d'oxyde,
- on prépare par polymérisation un composé organique, appelé pré-polymère, issu de la réaction de polycondensation obtenue en mélangeant un composé d'une première catégorie sélectionné dans le groupe constitué d'une polyamine, d'un polyalcool et d'un mélange de ceux-ci et un composé d'une seconde catégorie, sélectionné dans le groupe constitué d'un polyacide carboxylique, d'un polyanhydrique carboxylique, d'un polyepoxy, d'un polyisocyanate et d'un mélange quelconque d'au moins deux de ceux-ci;
- on mesure la viscosité du prépolymère pour déterminer l'état d'avancement de la polymérisation ;
- lorsque la viscosité du prépolymère atteint une valeur comprise entre 3000 et 25000 mPa·s (cP), on dissout le prépolymère dans ladite première solution aqueuse ayant un pH compris entre 9 et 13, afin d'obtenir une seconde solution aqueuse, ce qui arrête la polymérisation ;
- on dépose la seconde solution aqueuse sur le substrat qui se trouve à une température inférieure à 50°C, le dépôt étant réalisé sur bande métallique en ligne continue par essorage de la solution déposée sur les faces de la bande au moyen d'un jeu de rouleaux essoreurs, ou le dépôt étant réalisé sur bande métallique en ligne continue au moyen d'un système de rouleaux enducteurs, ou encore le dépôt étant réalisé sur tout autre produit métallurgique que les bandes par aspersion contrôlée ou trempage ;
- on sèche la solution déposée à l'air chaud, par induction ou aux infra-rouges, de manière à ce que la durée totale de dépôt et de séchage soit inférieure à 10 secondes, de sorte que l'évaporation de l'eau résultant du séchage permettra à la polymérisation du pré-polymère de s'achever.

Les modes d'exécution particuliers de l'invention comportent au moins une ou plusieurs des caractéristiques suivantes :

- le substrat à revêtir est soit un métal nu, de préférence l'acier, l'acier inoxydable (ou inox), l'aluminium, le magnésium, le zinc ou le cuivre, soit un premier métal revêtu d'un second métal, de préférence une bande d'acier recouverte d'une couche de zinc, d'aluminium, de magnésium, d'étain ou d'un alliage d'au moins deux de ces métaux ;
- les nanoparticules d'oxyde sont sélectionnées parmi le groupe constitué de $SiO_2$, $TiO_2$, $ZrO_2$, $Al_2O_3$, $CeO_2$, $Sb_2O_5$, $Y_2O_3$, ZnO, $SnO_2$ et des mélanges quelconques d'au moins deux de ces oxydes, ont une taille comprise entre 1 et 20 nm et se trouvent dispersées dans la solution à une teneur comprise entre 0,1 et 10%, et de préférence entre 1 et 10% ;
- les proportions en masse x en nanoparticules et en pré-polymère sont telles que 0,5 < x < 2, avec

$$x = \frac{masse_{nanoparticules}}{masse_{polymère}}.$$

## Description d'une forme d'exécution préférée de l'invention

La présente invention a pour objet un procédé de recouvrement d'une bande métallique par une couche hybride minérale/organique, appelée « silicalloy ».
La couche hybride selon l'invention est formée par dépôt d'une solution à base 100% aqueuse. La solution précitée comprend un mélange de nanoparticules de silice par exemple (une distribution en taille entre 1 et 20 nm) et d'un ou plusieurs pré-polymères, le tout en milieu basique (pH compris entre 9 et 13).
Le pré-polymère est un composé organique issu de la réaction de polycondensation entre deux catégories de composés :

- catégorie 1 : une di-, tri-, tetra- ou poly-amine, un di-, tri-, tetra- ou poly-alcool ou un mélange de ces derniers ;
- catégorie 2 : un di-, tri-, tetra- ou poly-acide carboxilique, un di-, tri-, tetra- ou poly-anhydrique carboxylique, un di-, tri-, tetra- ou poly-epoxy, un di-, tri-, tetra- ou poly-isocyanate ou un mélange de deux ou plusieurs de ces derniers.

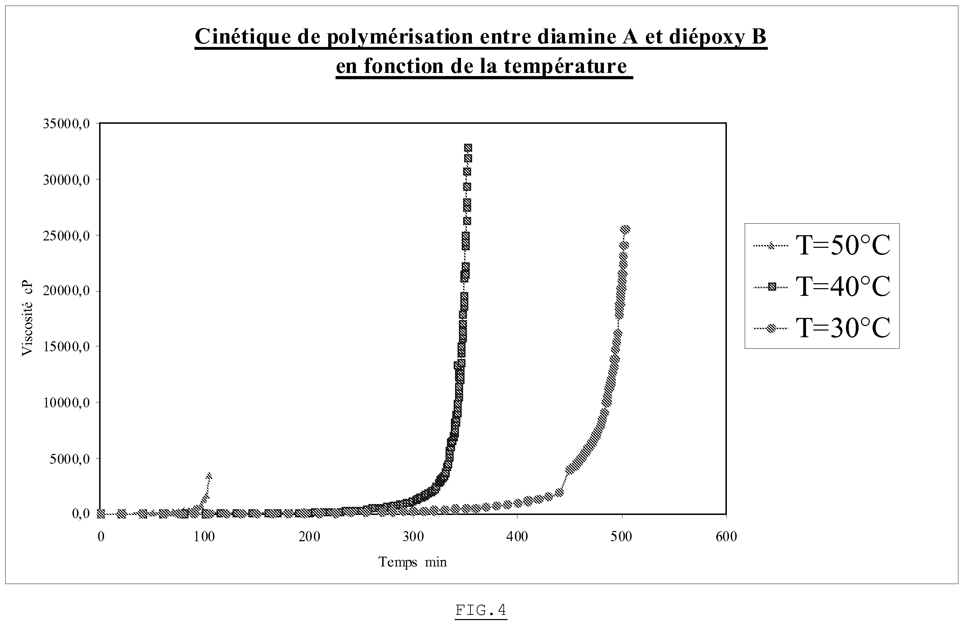

Le temps de réaction varie selon les composés en fonction de leur catégorie, leur proportion, la température de ce mélange et l'état de polymérisation souhaité. Ce dernier est suivi par mesure de viscosité. Sur la figure 4, on peut voir l'évolution de cette viscosité en fonction du temps, à différentes températures, pour un mélange d'une diamine A et d'un diepoxy B en proportion stoechiométrique.
Le pré-polymère ainsi formé et avec la viscosité souhaitée, comprise entre 3000 et 25000 mPa·s (cP), est ensuite dissous dans le reste de la solution, ce qui arrête la polymérisation. Le pré-polymère finira de réticuler pendant l'application de la solution, grâce à l'évaporation de l'eau et la température d'application. Le temps de cuisson reste inférieur à 10 secondes.
La solution froide (T < 50°C) est appliquée sur une tôle froide (T < 50°C) au moyen de systèmes d'application par rouleaux. Ces derniers peuvent être de simples rouleaux essoreurs ne laissant passer que la quantité nécessaire ou bien un système de rouleaux enducteurs ("roll-coater"). La solution appliquée est ensuite séchée à l'air chaud, par induction ou aux infra-rouges, pour obtenir au final un revêtement d'épaisseur comprise entre 50 et 500 nm suivant les cas.

*Résultat d'essais*

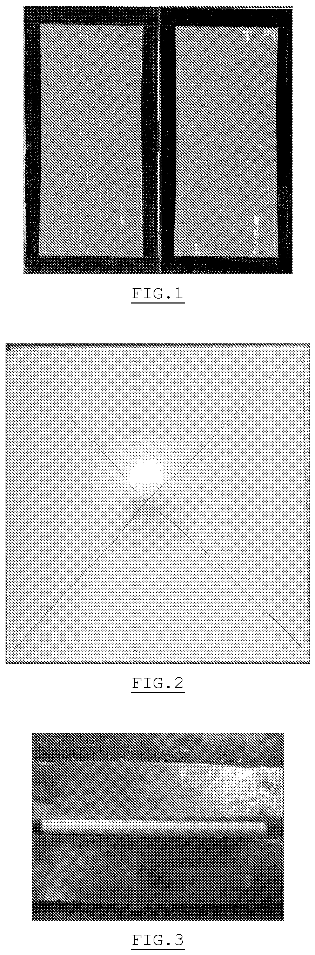

La figure 1 montre deux images d'un échantillon d'acier galvanisé, revêtu au moyen d'une couche selon la présente invention, le revêtement étant réalisé dans ce cas en continu sur une ligne pilote et laissé en brouillard salin pendant 120 h. Les deux photos sont prises à des intervalles respectifs de 24 et 48 h.

Sur la figure 2, on peut voir une plaque peinte avec un système de peintures (primaire + finition pour bâtiment). La plaque a été rayée en croix, emboutie par l'arrière et déposée 4 h dans l'eau bouillante. Aucune délamination n'est observée une fois la plaque séchée.

La figure 3 montre un échantillon peint avec le même système de peintures et plié 1T selon la norme du *T-bend test* (ISO 17132:2007). Aucune fissure n'est apparente sur la pliure.

*Exemple de préparation*

Dans un bécher de 500 mL, on verse 200 mL d'eau déminéralisée puis on ajoute 50 mL d'une dispersion aqueuse de nanoparticules de $SnO_2$ commerciale à 20% en masse. On y ajoute de la potasse pour atteindre un pH de 11. Ensuite, dans un autre bécher de 100 mL, on mélange 3,5 g de 4,4'-méthylenebiscyclohexanamine (technical grade 95%) avec 6,5 g de glycérol diglycidyl éther (technical grade) et on place ce mélange dans un bain thermostatisé à 35°C. On mesure, à l'aide d'un viscosimètre rotatif ou à vibration, la viscosité du mélange (indirectement l'avancement de la polymérisation) en temps réel. Une fois la viscosité de ce mélange atteignant 5000 mPa·s (cP) (après 5 h dans le cas présent), le prépolymère formé est dissous lentement dans le premier bécher contenant les nanoparticules d'oxyde d'étain. Enfin, le pH est recontrôlé et réajusté si nécessaire.

A titre d'exemple, pour une application en ligne, la solution, réalisée comme décrit ci-dessus, à une température d'environ 20°C, est envoyée grâce à une pompe sur une bande d'acier galvanisé qui défile. Elle est ensuite essorée par des rouleaux en caoutchouc. Le trop plein de liquide est récupéré et recyclé. Quant au liquide restant sur la bande (entre 1 à 2 mL/m$^2$), il est chauffé au moyen de lampes infrarouge. En 2 à 3 secondes, la surface du métal atteint 90-100°C, l'eau s'évapore et le pré-polymère peut finir de réticuler (à cette température, le pré-polymère finit de réticuler en quelques secondes).

**Revendications**

1. Procédé pour revêtir un substrat métallique de forme simple ou complexe, statique ou en mouvement, au moyen d'une couche de revêtement hybride minérale/organique ultrafin d'épaisseur comprise entre 50 et 500 nm, déposé sur le substrat, **caractérisé par** les étapes suivantes :

   - on prépare une première solution aqueuse constituée de nanoparticules d'oxyde ;
   - on prépare par polymérisation un composé organique, appelé prépolymère, issu de la réaction de polycondensation obtenue en mélangeant un composé d'une première catégorie sélectionné dans le groupe constitué d'une polyamine, d'un polyalcool et d'un mélange de ceux-ci et un composé d'une seconde catégorie, sélectionné dans le groupe constitué d'un polyacide carboxylique, d'un polyanhydrique carboxylique, d'un polyépoxy, d'un polyisocyanate et d'un mélange quelconque d'au moins deux de ceux-ci ;
   - on mesure la viscosité du prépolymère pour déterminer l'état d'avancement de la polymérisation ;
   - lorsque la viscosité du prépolymère atteint une valeur comprise entre 3000 et 25000 mPa·s (cP), on dissout le prépolymère dans ladite première solution aqueuse ayant un pH compris entre 9 et 13, afin d'obtenir une seconde solution aqueuse ;
   - on dépose la seconde solution aqueuse sur le substrat, qui se trouve à une température inférieure à 50°C, le dépôt étant réalisé sur bande métallique en ligne continue par essorage de la solution déposée sur les faces de la bande au moyen d'un jeu de rouleaux essoreurs, ou le dépôt étant réalisé sur bande métallique en ligne continue au moyen d'un système de rouleaux enducteurs, ou encore le dépôt étant réalisé sur tout autre produit métallurgique que les bandes par aspersion contrôlée ou trempage ;
   - on sèche la solution déposée à l'air chaud, par induction ou aux infra-rouges, de manière à ce que la durée totale de dépôt et de séchage soit inférieure à 10 secondes.

2. Procédé selon la revendication 1, **caractérisé en ce que** le substrat à revêtir est soit un métal nu, de préférence l'acier, l'acier inoxydable (ou inox), l'aluminium, le magnésium, le zinc ou le cuivre, soit un premier métal revêtu d'un second métal, de préférence une bande d'acier recouverte d'une couche de zinc, d'aluminium, de magnésium, d'étain ou d'un alliage d'au moins deux de ces métaux.

3. Procédé selon la revendication 1, **caractérisé en ce que** les nanoparticules d'oxyde sont sélectionnées parmi le groupe constitué de $SiO_2$, $TiO_2$, $ZrO_2$, $Al_2O_3$, $CeO_2$, $Sb_2O_5$, $Y_2O_3$, ZnO, $SnO_2$ et des mélanges quelconques d'au moins deux de ces oxydes, ont une taille comprise entre 1 et 20 nm et se trouvent dans la solution à une teneur comprise entre 0,1 et 10%, et de préférence entre 1 et 10%.

4. Procédé selon la revendication 1, **caractérisé en ce**

**que** les proportions en masse x en nanoparticules et en prépolymère sont comprises entre 0,5 et 2.

**Patentansprüche**

1. Verfahren zum Beschichten eines Metallsubstrats auf einfache oder komplexe Weise, statisch oder in Bewegung, mit Hilfe einer ultrafeinen mineralischen/organischen Hybridbeschichtung mit einer Dicke, die im Bereich zwischen 50 und 500 nm liegt, aufgebracht auf das Substrat, **gekennzeichnet durch** die folgenden Schritte:

   - Herstellen einer ersten wässrigen Lösung, die aus Oxidnanopartikeln besteht;
   - Herstellen durch Polymerisierung einer organischen Verbindung, bezeichnet als Präpolymer, das aus der Polykondensationsreaktion stammt, die durch Mischen einer Verbindung einer ersten Kategorie, ausgewählt aus der Gruppe, bestehend aus einem Polyamin, einem Polyalkohol und einer Mischung derselben, und einer Verbindung einer zweiten Kategorie, ausgewählt aus der Gruppe, bestehend aus einer Polycarbonsäure, einem Carbonpolyanhydrid, Polyepoxy, einem Polyisocyanat und einer Mischung mindestens zwei derselben;
   - Messen der Viskosität des Präpolymers, um den Stand der Durchführung der Polymerisierung zu bestimmen;
   - wenn die Viskosität des Präpolymers einen Wert erreicht, der zwischen 3000 und 25000 mPa•s (cP) liegt, Lösen des Präpolymers in der ersten wässrigen Lösung, die einen pH-Wert zwischen 9 und 13 aufweist, um eine zweite wässrige Lösung zu erhalten;
   - Aufbringen der zweiten wässrigen Lösung auf das Substrat, das sich bei einer Temperatur von weniger als 50 °C befindet, wobei die Aufbringung auf ein metallisches Band in kontinuierlicher Linie durch Schleudern der Lösung durchgeführt wird, die auf den Seiten des Bandes mit Hilfe eines Satzes von Schleuderrollen aufgebracht wird, wobei die Aufbringung auf ein metallisches Band in kontinuierlicher Linie mit Hilfe eines Systems von Beschichtungsrollen erfolgt, oder auch die Aufbringung auf jedes andere metallurgische Produkt als die Bänder durch kontrolliertes Ansaugen oder Einweichen;
   - Trocknen der abgelagerten Lösung mit Heißluft durch Induktion oder mit Infrarot, so dass die gesamte Dauer des Aufbringens und des Trocknens weniger als 10 Sekunden beträgt.

2. Verfahren nach Anspruch 1, **dadurch gekennzeichnet, dass** das zu beschichtende Substrat entweder ein bloßes Metall ist, vorzugsweise Stahl, rostfreier Stahl (oder Inox), Aluminium, Magnesium, Zink oder Kupfer, oder ein erstes Metall, das mit einem zweiten Metall beschichtet ist, vorzugsweise ein Stahlband, das mit einer Schicht aus Zink, Aluminium, Magnesium, Zinn oder einer Legierung von mindestens zwei dieser Metalle beschichtet ist.

3. Verfahren nach Anspruch 1, **dadurch gekennzeichnet, dass** die Oxidnanopartikel ausgewählt sind aus der Gruppe, bestehend aus $SiO_2$, $TiO_2$, $ZrO_2$, $Al_2O_3$, $CeO_2$, $Sb_2O_5$, $Y_2O_3$, ZnO, $SnO_2$ und Mischungen von mindestens zwei dieser Oxide, eine Größe aufweisen, die im Bereich zwischen 1 und 20 nm liegt und sich in einer Lösung mit einem Gehalt befinden, der im Bereich zwischen 0,1 und 10 %, vorzugsweise zwischen 1 und 10 % liegt.

4. Verfahren nach Anspruch 1, **dadurch gekennzeichnet, dass** die Massenanteile x an Nanopartikeln und an Präpolymer im Bereich zwischen 0,5 und 2 liegen.

**Claims**

1. method for coating a static or moving metal substrate with a simple or complex shape, by means of an ultra-thin mineral/organic hybrid coating layer with a thickness comprised between 50 and 500nm, deposited on the substrate, **characterized by** the following steps:

   - a first aqueous solution comprising oxide nanoparticles is prepared,
   - an organic compound called a pre-polymer is prepared by polymerisation, resulting from the polycondensation reaction obtained by mixing a compound of a first category selected from the group consisting of a polyamine, a polyalcohol and a mixture of those, and a compound of a second category, selected from the group consisting of a polycarboxylic acid, a polycarboxylic anhydride, a polyepoxy, a polyisocyanate and any mixture of at least two of those;
   - the viscosity of the pre-polymer is measured in order to determine the state of progression of polymerization;
   - when the viscosity of the pre-polymer reaches a value comprised between 3000 and 25000 mPa.s (cP), the pre-polymer is dissolved in said first aqueous solution at a pH comprised between 9 and 13 in order to obtain a second aqueous solution;
   - the second aqueous solution is deposited on the substrate, which is found at a temperature below 50°C, the deposition being carried out on a metal strip on a continuous line by wringing the deposited solution on the faces of the strip by means of a set of wringer rollers, or the deposition being carried out on a metal strip on a continuous line by means of a system of coater rollers, or even the deposition being carried out on any metallurgical product other than strips by controlled spraying or dipping;

- the coated solution is then dried with hot air, by induction or by infra-red radiations so that the total duration of deposition and drying is less than 10 seconds.

2. Method according to Claim 1, **characterized in that** the substrate to be coated is either a bare metal, preferably steel, stainless steel (or corrosion-resisting steel), aluminium, magnesium, zinc or copper, or a first metal coated with a second metal, preferably a steel strip covered with a layer of zinc, aluminium, magnesium, copper, or an alloy of at least two of these metals.

3. Method according to Claim 1, **characterized in that** the oxide nanoparticles are selected from the group consisting of $SiO_2$, $TiO_2$, $ZrO_2$, $Al_2O_3$, $CeO_2$, $Sb_2O_5$, $Y_2O_3$, ZnO, $SnO_2$ and any mixtures of at least two of these oxides, have a size comprised between 1 and 20nm and are found in the solution at a content comprised between 0.1 and 10%, and preferably between 1 and 10%.

4. Method according to Claim 1, **characterized in that** the mass proportions x of nanoparticles and of prepolymer are comprised between 0.5 and 2.

FIG.1

FIG.2

FIG.3

**Cinétique de polymérisation entre diamine A et diépoxy B en fonction de la température**

FIG.4

## RÉFÉRENCES CITÉES DANS LA DESCRIPTION

**Documents brevets cités dans la description**

- WO 03048403 A
- WO 2005059196 A

- US 20040054044 A